# EUROPEAN PATENT APPLICATION

(11) **EP 4 518 435 A1**
(43) Date of publication of application: **05.03.2025**
(21) Application number: 23194503.1
(22) Date of filing: 31.08.2023
(51) Int. Cl.: H04W 36/32

(54) **METHOD FOR ENSURING COMMUNICATION PATH REDUNDANCY ALONG A ROUTE**

(71) Applicant: Volkswagen Aktiengesellschaft, 38440 Wolfsburg (DE)
(72) Inventor: Montero Bayo, Luca, 12049 Berlin (DE); Pfadler, Andreas, 13357 Berlin (DE)

(57) **Abstract**

The present disclosure concerns a method for ensuring communication path redundancy along a route, the method comprising: defining (201) parameters of the route; transmitting (202) a request to a remote device (302) for determining the route providing the communication path redundancy along the route, the request comprising the parameters; receiving (203) from the remote device (302), for each identified communication path including a first communication path and one or more redundant communication paths, a route handover strategy; wherein the route handover strategy indicates a set of waypoints along the route at which a handover is to be performed from a first transmission-reception point, TRP, to a second TRP. A corresponding remote device is also provided.

## Description

The present disclosure relates to a method and apparatus for ensuring communication path redundancy along a route. Particularly, the method is applicable when there are more than one mobile network operators, MNOs, providing mobile communication service to a receiver (or otherwise to a terminal or more generically to a device) and when the receiver requires communication paths redundancy as its movement constraint.

Prior art defines an automated vehicle, also known as an AV, an autonomous vehicle, a self-driving car, a driverless car, a robo-car, or a robotic car, which is a vehicle that is capable of sensing its environment and moving safely with little or no human input. The transition from human-operated to fully autonomous driving has led to a growing need for constant and reliable connectivity, which is essential to ensure safe operation. Connectivity is critical for autonomous navigation and for responding to safety-critical situation. The vehicle needs to have a constant and dependable radio access to a reliable network that can provide remote assistance to the vehicle without a safety driver particularly in case of unknown or critical scenarios.

Further, automotive applications and mobile communications become more and more entangled, particularly due to the increasing interest in automatic driving that requires larger amounts of data when compared to conventional driving. These data amounts are provided partially by the vehicle itself (i.e., by sensors thereof) and partially via an air/radio interface. Via the air interface such as a vehicle to vehicle, V2V, communication or a vehicle to infrastructure, V2I, communication or a vehicle to everything, V2X, communication is carried out, the latter including communication with road side units, RSUs.

Critical scenarios, such as flight scenarios, often apply redundancy of hardware circuits and software to ensure a backup operation in case of a failure of a first or primary operating module. Frequently, such redundancy is provided by installing a full copy of the primary operating module. However, in case of mobile solutions, and in particular AV-related solutions, there is a need to define how redundancy could be incorporated in critical movement scenarios.

AVs have become an important focus of research and development in recent years. The issue of having a constant and dependable radio access to a reliable network is especially relevant if the vehicle is being directly tele-operated, as actuation commands are wirelessly sent to the AV. As such, ensuring end-to-end path redundancy for wired and/or wireless connections is crucial for the safety of autonomous driving architectures.

It is thus an object of the present disclosure to overcome or reduce at least some of the drawbacks of the prior art and to provide a method for ensuring communication path redundancy along a route. The given task is solved by the subject-matter of the independent claim 1. Advantageous embodiments of the invention can further be gained from the dependent claims and/or optional features of the description.

### Description of the invention

A first aspect of the present disclosure is a method for ensuring communication path redundancy along a route, the method comprising: defining parameters of the route, transmitting a request to a remote device for determining the route providing the communication path redundancy along the route, the request comprising the parameters, receiving from the remote device, for each identified communication path including a first communication path and one or more redundant communication paths, a route handover strategy, wherein the route handover strategy indicates a set of waypoints along the route at which a handover is to be performed from a first transmission-reception point, TRP, to a second TRP.

This method addresses a scenario when an AV requires a redundant radio communication path with one or more networks (e.g. two independent physical wireless paths, this may include distinct radio access technologies, between the AV and the network) over a route from a point A to a point B. Different communication paths (i.e. a first/primary communication and a redundant communication path) may mean at least that they are provided by different MNOs at every point of the route. By the route handover strategy the terminal is aware which TRPs or base stations to connect to, in order to ensure radio path redundancy and achieve a safe routing. Preferably, the route handover strategies are ordered according to predicted quality of service they provide. Owing to that, the terminal will be informed on which identified communication path it is expected to obtain the best service and which may be selected as a primary communication path for the route.

According to an option according to any previous variants of the first aspect of the present invention the electronic device is an automatic vehicle. In other variants, the electronic device executing the method may be a part of the automatic vehicle or part of a vehicle in general. Although the electronic device may be an AV, the first aspect of the present disclosure is not limited thereto. Further, data transmitted to the remote device over the primary communication path and the one or more redundant communication paths may be the same or related such that the data transmitted over a redundant communication path is a subset of the data transmitted over the primary communication path or otherwise has a lower quality of said data.

According to the first aspect of the present disclosure the parameters of the route include a start point and an end point. Optionally, the route may be defined more precisely (e.g. with waypoints or segments) so that the remote device may consider a specific route between the start and end points. Advantageously, this allows to shift the tasks related to route determination between the terminal and the server.

According to the preceding variant of the first aspect of the present disclosure, the parameters of the route further include one or more of a start time, at least one waypoint, and an arrival time. By including a start time or an arrival time the remote device will be aware to determine network conditions at specified predicted times in the future instead of a default assumption that the route is to be executed immediately. Further, including a preferred at least one waypoint in the route parameters advantageously allows to plan the route more tailored to the needs of a user/terminal. In other words, the parameters of the route may define the route at different levels, up to defining the complete route.

According to any preceding variant of the first aspect of the present disclosure, the request indicates a number of required redundant communication paths. This option is advantageously useful to inform the remote device how many redundant communication paths to consider. Typically this value will be set as one or two redundant communication paths in addition to the primary (first) communication path but the method is not limited thereto.

According to any preceding variant of the first aspect of the present disclosure, the TRP device is a base station. Any type of base station may be used such as Node B, eNodeB or gNB. If it is sufficient to rely on one way communication, a TRP device may be exchanged with a transmission point, TP, device only. A TRP may also be a road side unit.

According to any preceding variant of the first aspect of the present disclosure, the same TRP is not provided for different communication paths at the same waypoint. It may be the case that the number of TRPs/base stations is actually lower than the number of MNOs at a given location because MNOs may share physical communication links (virtual MNO). Therefore, there may be a case where, although there are more than one MNOs, there is no or less redundancy of a physical communication link. This is an important factor when planning routes with communication path redundancy. It is also noted that MNOs are not the only source of communication links because other radio access technologies, RATs, may also be usable (e.g. not mobile as opposed to MNOs). Within that context a communication path may use different physical communication links along the route at different time instants. Consequently, any radio communication link may be considered for communication path redundancy verification. Therefore, preferably the primary and the one or more redundant communication paths do not share the same TRP at a given time instant. In other words, at any time instant along the route, the primary communication path's TRP is preferably different from any TRP of the one or more redundant communication paths at the time instant. For example, when the primary communication path is at a waypoint connected to a source TRP A (and is intended to make a handover to a destination TRP at the waypoint), while the only redundant communication path is at the waypoint connected to a source TRP B (and is not intended to make a handover to a destination TRP), the primary communication path cannot be handed over to TRP B because it is already in service for the only redundant communication path. Advantageously, this option always keeps the different communication paths physically separate.

According to any preceding variant of the first aspect of the present disclosure, coverage areas of two consecutive TRPs associated with a handover have an overlapping coverage at a handover waypoint, wherein the overlapping coverage satisfies a threshold condition. This parameter, which may depend on predicted speed of movement of a device, advantageously ensures sufficient signal quality of both TRPs involved in a handover as well as a sufficient time to execute the handover.

According to any preceding variant of the first aspect of the present disclosure, the route handover strategy further includes a predictive quality of service, pQoS, profile for the route. The pQoS may be estimated for the route as an average pQoS for example or as a minimum pQoS on the route in order to allow the terminal to adjust its operating parameters accordingly. The pQoS for the primary communication path and for the redundant communication path may be different from one another and typically the redundant communication path's pQoS will be inferior to the pQoS of the primary communication path. Based on this information the terminal may advantageously adapt the redundant communication path's data rate if the redundant communication path's pQoS does not match the pQoS of the primary communication path.

According to any preceding variant of the first aspect of the present disclosure, the route handover strategy further includes a predictive quality of service, pQoS, profile for each segment of the route being defined between two adjacent waypoints along the route selected from the set of waypoints. Based on this information the terminal may advantageously adapt redundancy data rate if the redundant communication path's pQoS does not match the pQoS of the primary communication path at a given segment of the route.

According to any preceding variant of the first aspect of the present disclosure, the method further comprises (once the route is being executed by the terminal according to the route handover strategies) a step of transmitting, to the remote device, feedback on experienced QoS along the route. The feedback may be provided at one or more of the adjacent waypoints along the route selected from the set of waypoints or for a segment between adjacent waypoints. By receiving feedback information the network authority may compare the actual QoS within a given segment of the route with the pQoS. Such information may be further shared with an MNO providing the service in order to improve its pQoS reporting as well as the route handover strategy.

According to any preceding variant of the first aspect of the present disclosure, the method further comprises a step of receiving from the remote device the route comprising the set of waypoints of each identified communication path. In this scenario, the remote device not only provides the route handover strategy but also a defined route that may be applied by the terminal. In this manner there is avoided a potential mismatch between the route considered by the remote device and the route that may be inferred by the terminal from the route handover strategies, if the remote device does not explicitly provide the route.

A second aspect of the present disclosure is an electronic apparatus comprising a processor configured to execute all steps of any of the preceding variant of the first aspect of the present disclosure.

A third aspect of the present disclosure is a method for ensuring communication path redundancy along a route, the method comprising: receiving a request from an external device for determining the route providing the communication path redundancy along the route, the request comprising route parameters, determining that a first communication path is present along the route defined according to the route parameters, determining that at least one redundant communication path is present along the route, determining for each identified first and the at least one redundant communication paths, a route handover strategy indicating a set of waypoints along the route at which a handover is to be performed from a first transmission-reception point, TRP, to a second TRP, and transmitting to the external device, for each identified first and the at least one redundant communication paths, the route handover strategy.

The parameters of the route preferably include a start point and an end point. If the route is defined by the start and end points only, the device may obtain (itself or from a remote device) a full routing between these start and end points according to a roads' map. Such a fully defined route along the road's map is the route defined according to the route parameters. The parameters of the route further include one or more of a start time, a waypoint, an arrival time. By including a start time or an arrival time the remote device will be aware to determine network conditions at specified predicted times in the future instead of a default assumption that the route is to be executed immediately. Further, including a preferred waypoint in the route parameters allows to plan the route more tailored to the needs of a user/terminal. If the parameters of the route define a complete route the received route may be modified if needed. The modification may be aimed at arriving at a route that allows to meet the required redundancy of communication paths. When the request does not comprise a number of required redundant communication paths, a default approach may be assumed wherein the default approach sets for example one redundant communication path to a primary communication path.

The process of determining that a first communication path is present along the route defined according to the route parameters means that there may be supported a primary communication path along the route without service interruptions. This information may be obtained by a verification of the route against network coverage maps of different MNOs. Further, the step of determining that at least one second communication path is present along the route means that based on the network coverage maps there may be supported, along the route and without service interruptions, at least one redundant communication path to the primary communication path. In some cases it may be beneficial to consider how different MNOs cooperate with one another i.e. whether they have a roaming agreement in force.

According to any preceding variant of the third aspect of the present disclosure, the request indicates a number of required redundant communication paths. This option is useful to inform the remote device how many redundant communication paths to consider for the external device. Typically this value will be set as one or two redundant communication paths in addition to the primary communication path but the method is not limited thereto.

According to any preceding variant of the third aspect of the present disclosure the same TRP is not provided for different communication paths at the same waypoint. Additionally or alternatively, coverage areas of two consecutive TRPs associated with a handover have an overlapping coverage at a handover waypoint, wherein the overlapping coverage satisfies a threshold condition. As explained above this advantageously allows to use only distinct physical links as well as to ensure sufficient handover conditions taking into account for example expected speed of the vehicle or expected environmental conditions during the handover e.g. rain, fog etc.

A fourth aspect of the present invention is a computer program comprising instructions which, when the program is executed by a computer, cause the computer to carry out all the steps of the method of the first aspect or the third aspect of the present disclosure according to any variants thereof presented above.

A fifth aspect of the present invention is a computer-readable storage medium comprising instructions which, when executed by a computer, cause the computer to carry out all the steps of the method of the first aspect or the third aspect of the present disclosure according to any variants thereof presented above.

Such computer programs are typically executed by utilizing the computing resources in a computing device e.g. a processor or a controller. Applications are stored on a non-transitory medium. An example of a non-transitory medium is a non-volatile memory, for example a flash memory while an example of a volatile memory is RAM. The computer instructions are typically executed by a processor. These memories are exemplary recording media for storing computer programs comprising computer-executable instructions performing all the steps of the computer-implemented method according the technical concept presented herein.

The various embodiments of the invention mentioned herein can be advantageously combined with each other, unless otherwise specified in the individual case.

Various objects and advantages of the present invention will become apparent to those skilled in the art from the following detailed description of embodiments, when read in light of the accompanying drawings.

### Brief description of the figures

Reference is now made to the following figures, in order to describe preferred embodiments of the invention in more detail:
- Fig. 1A: presents an overview of a route handover strategy for redundant communication paths,
- Fig. 1B: presents a more detailed view of a handover at a waypoint in consideration of a coverage overlap threshold,
- Fig. 2A: presents a block diagram of a method of an electronic device according to the present disclosure,
- Fig. 2B: presents a block diagram of a method of a remote electronic device according to the present disclosure, and
- Fig. 3: presents a time-versus-devices block diagram of the communication process according to the present disclosure.

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

As utilized herein, the term "example" means serving as a non-limiting example, instance, or illustration. As utilized herein, the terms "for example" and "e.g." introduce a list of one or more non-limiting examples, instances, or illustrations.

As used herein, the term "and/or" includes any and all combinations of one or more of the associated listed items. Further, the use of "may" when describing embodiments of the present invention refers to "one or more embodiments of the present invention." Further, in the following description of embodiments of the present invention, the terms of a singular form may include plural forms unless the presented context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items and expressions such as "at least one of" when preceding a list of elements, modify the entire list of elements.

Reference will now be made in detail to embodiments which are illustrated in the drawings. Effects and features of the exemplary embodiments will be described with reference to the accompanying drawings. Therein, like reference numerals denote like elements, and redundant descriptions are omitted. The present invention, however, may be embodied in various different forms, and should not be construed as being limited to only the illustrated embodiments herein. Rather, these embodiments are provided solely as examples for fully conveying the aspects and features of the present invention to those skilled in the art.

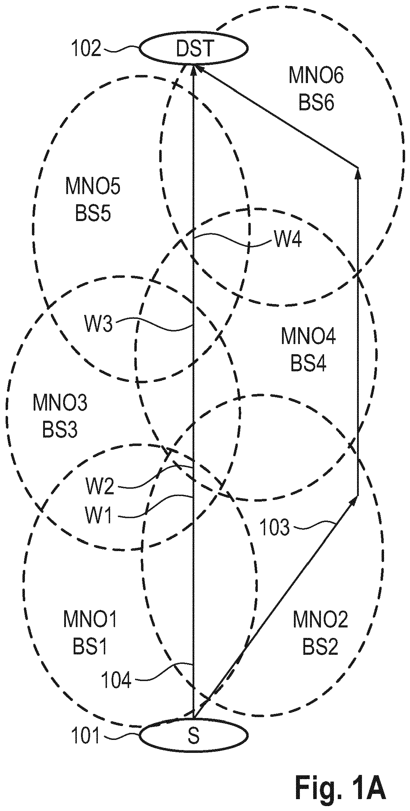

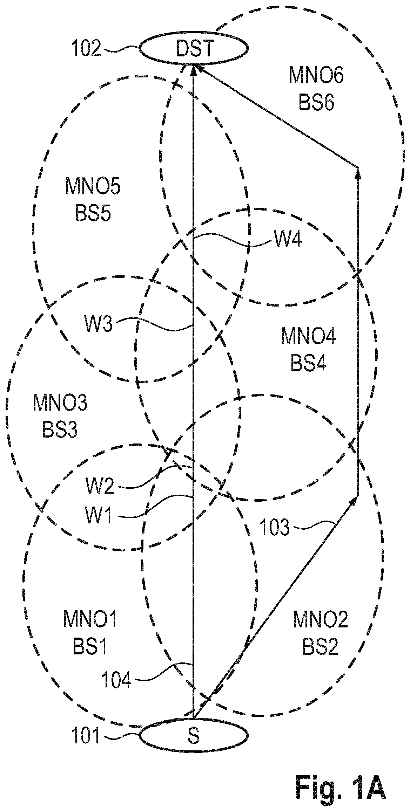

Fig. 1A presents an overview of a route handover strategy for redundant communication paths. In this example, the network authority, i.e. a network functionality or entity capable accessing information from the network, such as network coverage maps of different MNOs, may determine that given the start point 101 and an end point 102 of a route, route 103 is not feasible under the required redundancy of communication paths while route 104 is feasible with one redundant communication path in addition to a primary communication path. For example the network coverage maps of different MNOs may be overlaid on a world, country or a region map.

The primary communication path may comprise physical communication links provided by MNO1, MNO3 and MNO5, while the redundant communication path may comprise physical communication links provided by MNO2, MNO4 and MN06, which provide independently a full coverage of the route 104 with a communication path. The primary communication path will typically be selected based on estimated pQoS for the route. It is preferred that the primary communication path will provide better pQoS than the redundant communication path.

For each of the primary communication path and the redundant communication path a route handover strategy is determined, wherein the route handover strategy indicates a set of waypoints along the route at which a handover is to be performed from a first transmission-reception point, TRP, to a second TRP. In Fig. 1A the primary communication path comprises a set of three MNOs and therefore the route handover strategy will comprise two waypoints W1 and W3. Correspondingly, the redundant communication path comprises a set of three MNOs and therefore the route handover strategy will comprise two waypoints W2 and W4. Preferably, the exact positioning of the waypoints indicating a handover point is selected in view of a point where both the source TRP and the destination TRP have sufficient QoS for a seamless handover.

The route handover strategy for the primary communication path may be defined as follows:
- [optional pQoS for the communication path]
- Way point 1
   ∘ Geolocation coordinates of W1
   ∘ Source BS1 [optional pQoS]
   ∘ Destination BS3 [optional pQoS]
- Way point 2
   ∘ Geolocation coordinates of W3
   ∘ Source BS3
   ∘ Destination BS5 [optional pQoS]

Correspondingly, the route handover strategy for the redundant communication path may be defined as follows (note the local numbering of waypoints):
- [optional pQoS for the communication path]
- Way point 1
   ∘ Geolocation coordinates of W2
   ∘ Source BS2 [optional pQoS]
   ∘ Destination BS4 [optional pQoS]
- Way point 2
   ∘ Geolocation coordinates of W4
   ∘ Source BS4
   ∘ Destination BS6 [optional pQoS]

A pQoS may be estimated for the route as an average pQoS for example or as a minimum pQoS on the route and included optionally in the route handover strategy in order to allow the terminal to adjust its operating parameters accordingly. The pQoS for the primary communication path and for the redundant communication path may be different from one another and typically the redundant communication path's pQoS will be inferior to the pQoS of the primary communication path. Based on this information, the terminal may adapt redundancy data rate if the redundant communication path's pQoS does not match the pQoS of the primary communication path (which may be temporal e.g. at a given segment of the route).

Similarly, the route handover strategy may include an optional predictive quality of service, pQoS, profile for each segment of the route being defined between two adjacent waypoints along the route selected from the set of waypoints. Based on this information the terminal may adapt redundancy data rate if the redundant communication path's pQoS does not match the pQoS of the primary communication path at a given segment of the route.

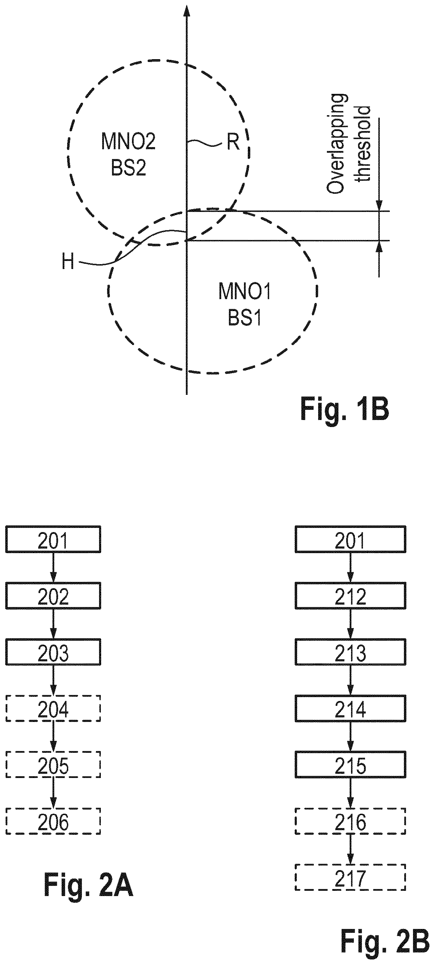

Fig. 1B presents a more detailed view of a handover at a waypoint in consideration of a coverage overlap threshold. As explained above, coverage areas of two consecutive TRPs associated with a handover preferably have an overlapping coverage at a handover waypoint, wherein the overlapping coverage satisfies a threshold condition. This threshold condition may vary depending, for example, on expected speed of the vehicle/device or expected environmental conditions during the handover e.g. rain, fog etc. To qualify for a safe handover waypoint, such waypoint may be required to meet the threshold condition regarding overlapping of coverage. The network authority may verify the condition based on network coverage maps of different MNOs that are available to it. Such a condition may be a distance along the route within which the receiver/terminal will be able to receive signals from both consecutive TRPs as shown in Fig. 1B.

Fig. 2A presents a block diagram of a method of an electronic device according to the present disclosure. The process starts from defining 201 parameters of the route, and subsequently transmitting 202 a request to a remote device for determining the route providing the communication path redundancy along the route, the request comprising the parameters. Next, at step 203, the electronic device receives from the remote device, for each identified communication path including a first communication path and one or more redundant communication path, a route handover strategy, wherein the route handover strategy indicates a set of waypoints along the route at which a handover is to be performed from a first transmission-reception point, TRP, to a second TRP.

As optional steps, the method may execute receiving 204 from the remote device the route comprising the set of waypoints of each identified communication path and execute 205 the route according to the route handover strategies. Lastly, the electronic device may transmit 206 to the remote device feedback on an experienced QoS along the route. The feedback may be provided at one or more of the adjacent waypoints (or between two adjacent waypoints) along the route, the waypoints being selected from one set of waypoints associated with a route handover strategy. Alternatively, the feedback may be provided for a segment between adjacent waypoints.

If the route is not provided explicitly from the remote device in step 204, the electronic device may use the way points of the route handover strategies to define precisely the final route.

Fig. 2B presents a block diagram of a method of a remote electronic device according to the present disclosure. The process starts from receiving 211 a request from an external device for determining the route providing the communication path redundancy along the route, the request comprising route parameters. Next, at step 212 there is executed determining that a first communication path is present along the route defined according to the route parameters. Further, at step 213 the process determines that at least one redundant communication path is present along the route. Subsequently, at step 214 the method performs determining for each identified first and the at least one redundant communication paths, a route handover strategy indicating a set of waypoints along the route at which a handover is to be performed from a first transmission-reception point, TRP, to a second TRP. Lastly, at step 215 there is executed transmitting to the external device, for each identified first and the at least one redundant communication paths, the route handover strategy.

As optional steps, the method may execute transmitting 216 to the external device the route according to the set of waypoints of each identified communication path. Lastly, the remote electronic device may receive 217, from the external device, feedback on experienced QoS along the route as already explained with reference to step 206. By receiving feedback information the network authority may compare the actual QoS within a given segment of the route with the pQoS. Such information may be further shared with an MNO providing the service in order to improve its pQoS reporting and or may be used by the remote device to improve the determination of route handover strategies.

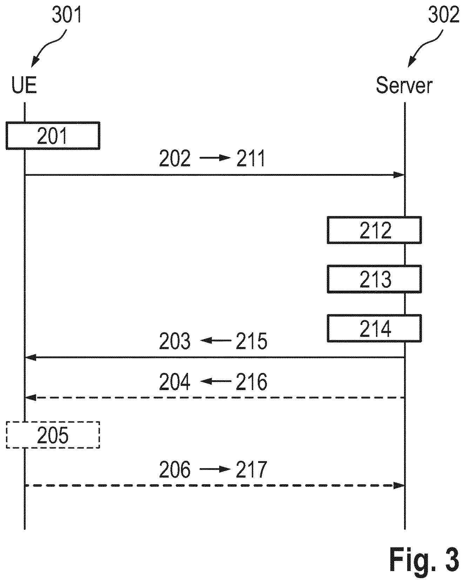

Fig. 3 presents a time-versus-devices block diagram of the communication process according to the present disclosure. The terminal 301 corresponds to the terminal executing the method shown with respect to Fig. 2A and the server 302 corresponds to the network authority executing the method shown with respect to Fig. 2B. In an alternative embodiment, the method may be fully realized in a single device instead of two separate devices 301 and 302 as in Fig. 3. Nevertheless, a preferred implementation is a client-server approach since it is beneficial when the process of determining a route handover strategy is executed at a node of a network or a centralized node common to a plurality of networks. This is due to a complexity of this process and the fact that it is less preferred to have this function implemented by a terminal because the required data/information is inherently related to the network.

### Reference signs

- 101: route start point
- 102: route end point
- 103: a route that is not feasible under the required redundancy of communication paths
- 104: a route that is feasible with one redundant communication path in addition to a primary communication path

- 201: defining parameters of the route
- 202: transmitting a request to a remote device for determining the route providing the communication path redundancy along the route, the request comprising the parameters
- 203: receiving from the remote device, for each identified communication path including a first communication path and one or more redundant communication path, a route handover strategy
- 204: receive from the remote device the route comprising the set of waypoints of each identified communication path
- 205: executing the route according to the route handover strategies
- 206: transmitting to the remote device feedback on experienced QoS along the route
- 211: receiving a request from an external device for determining the route providing communication path redundancy along the route
- 212: determining that a first communication path is present along the route defined according to the route parameters
- 213: determining that at least one redundant communication path is present along the route
- 214: determining for each identified first and the at least one redundant communication paths, a route handover strategy
- 215: transmitting to the external device, for each identified first and the at least one redundant communication paths, the route handover strategy
- 216: transmitting to the external device the route according to the set of waypoints of each identified communication path
- 217: receiving from the external device feedback on experienced QoS along the route
- 301: terminal, UE
- 302: server

## Claims

1. A method for ensuring communication path redundancy along a route, the method comprising:
- defining (201) parameters of the route;
- transmitting (202) a request to a remote device (302) for determining the route providing the communication path redundancy along the route, the request comprising the parameters;
- receiving (203) from the remote device (302), for each identified communication path including a first communication path and one or more redundant communication paths, a route handover strategy;
wherein the route handover strategy indicates a set of waypoints along the route at which a handover is to be performed from a first transmission-reception point, TRP, to a second TRP.

2. The method according to claim 1, wherein the parameters of the route include a start point and an end point.

3. The method according to claim 2, wherein the parameters of the route further include one or more of a start time, a waypoint, and an arrival time.

4. The method according to any of claims 1 to 3, wherein the request indicates a number of required redundant communication paths.

5. The method according to any of claims 1 to 4, wherein the TRP is a base station.

6. The method according to any of claims 1 to 5, wherein the same TRP is not provided for different communication paths at the same waypoint.

7. The method according to any of claims 1 to 6, wherein the coverage areas of two consecutive TRPs associated with a handover have an overlapping coverage at a handover waypoint, wherein the overlapping coverage satisfies a threshold condition.

8. The method according to any of claims 1 to 7, wherein the route handover strategy further includes a predictive quality of service, pQoS, profile for the route.

9. The method according to any of claims 1 to 8, wherein the route handover strategy further includes a predictive quality of service, pQoS, profile for each segment of the route being defined between two adjacent waypoints along the route selected from the set of waypoints.

10. The method according to any of claims 1 to 9, further comprising a step of transmitting (206) to the remote device (302) feedback on experienced (205) QoS along the route.

11. The method according to any of claims 1 to 10, further comprising a step of receiving (204) from the remote device (302) the route comprising the set of waypoints of each identified communication path.

12. An apparatus comprising a processor configured to execute all steps of any of the methods according to any of claims 1 to 11.

13. A method for ensuring communication path redundancy along a route, the method comprising:
- receiving (211) a request from an external device (301) for determining the route providing the communication path redundancy along the route, the request comprising route parameters;
- determining (212) that a first communication path is present along the route defined according to the route parameters;
- determining (213) that at least one redundant communication path is present along the route;
- determining (214) for each identified first and the at least one redundant communication paths, a route handover strategy indicating a set of waypoints along the route at which a handover is to be performed from a first transmission-reception point, TRP, to a second TRP; and
- transmitting (215) to the external device (301), for each identified first and the at least one redundant communication paths, the route handover strategy.

14. The method according to claim 13, wherein the request indicates a number of required redundant communication paths.

15. The method according to any of claims 13 or 14, wherein the same TRP is not provided for different communication paths at the same waypoint and wherein coverage areas of two consecutive TRPs associated with a handover have an overlapping coverage at a handover waypoint, wherein the overlapping coverage satisfies a threshold condition.
